# EUROPÄISCHE PATENTSCHRIFT

(11) **EP 1 914 121 B1**
(45) Veröffentlichungstag und Bekanntmachung des Hinweises auf die Patenterteilung: **02.10.2013**
(21) Anmeldenummer: 07118646.4
(22) Anmeldetag: 17.10.2007
(51) Int. Cl.: B60R 13/08, C23C 14/14, C23C 14/18

(54) **Verfahren zur Herstellung eines Wärmeschutzes**
Method for manufacturing a heat insulation
Procédé de fabrication d'une isolation thermique

(30) Priorität: 17.10.2006 DE 102006048912
(43) Veröffentlichungstag der Anmeldung: 23.04.2008
(73) Patentinhaber: Zipper-Technik GmbH, 63263 Neu-Isenburg (DE); Darmstädter GmbH, 46485 Wesel (DE)
(72) Erfinder: Darmstädter-Wilmsen, Petra, 46485 Wesel (DE); Jülicher, Bernd, 41239 Mönchengladbach (DE); Kirschning, Manfred, Dr., 63579 Freigericht (DE)
(74) Vertreter: von Kreisler Selting Werner

(56) Entgegenhaltungen:
- EP-A- 0 016 328
- EP-A- 1 690 743
- WO-A-99/58833
- WO-A-03/008042
- DE-A1- 4 024 488
- JP-A- 62 253 763
- US-A1- 2001 009 725

## Beschreibung

Die vorliegende Erfindung betrifft ein Wärmeschutzprodukt und ein Verfahren zu seiner Herstellung.

Wärmeabschirmende oder wärmeschützende Produkte werden beispielsweise im Kraftfahrzeugmotorbereich eingesetzt. Diese werden benutzt, um temperaturempfindliche Bauteile (beispielsweise Sensoren, Kabel, Schläuche, Stecker, Elektronik) vor der Abwärme anderer Bauteile (beispielsweise der Abgasanlage) zu schützen. DE 197 55 314 beschreibt beispielsweise ein solches Bauteil.

WO 03/008042 A1 beschreibt Gewebe aus Melamin und Polyesterfasern, die in einer Ausführungsform Metallschichten aufweisen können.

WO 99/58833 A1 beschreibt eine Wärme - und schalldämmende Verkleidung für den Motorraum. Zum Einsatz kommen Vliesstoffe Besonders bevorzugte Materialien zur Herstellung des Vliesstoffes sind Glasfaser-verstackte oder Glasgitter - verstackte Fasermaterialien, insbesondere Bindemittel enthaltende Textilvliese. In einigen Ausführungsformen ist die motorseitige Deckschicht partiell oder vollflächig mit einer Metallfolie versehen.

US 2001/000 9725 beschreibt ein Hitze-schutzverfahren, beidem zur IR - Reflexion eine Aluminiumschicht durch Gasphasen - abscheidung aufgebracht wird.

Die DE 10 2004 044 057 beschreibt eine Wärmeabschirmung in Form einer wärmebeständigen Folie oder eines wärmebeständigen Flächenelementes.

Im Stand der Technik bestehen solche Materialien auch aus einem Glasgewebeträger, auf dem eine Aluminiumfolie aufgeklebt worden ist. Solche Klebemittel zeigen jedoch nur eine Temperaturstabilität bis maximal 250°C.

Weiterhin ist versucht worden, Aluminium auf einen entsprechenden Träger aufzuspritzen. Die so erhaltene Aluminiumschicht ist jedoch rau, was zur Beschädigung der zu schützenden Bauteile führen kann. Außerdem wird durch den Spritzprozess die Zugbelastungsfähigkeit des Glasgewebeträgers beeinträchtigt, was bei Dauertemperaturen oberhalb von 200°C zu einer starken Reduzierung der Restreißkräfte führt.

Es besteht weiterhin ein Bedarf nach verbesserten Wärmeschutzmaterialien, insbesondere solchen, die in der Lage sind, höhere Temperaturen als 250°C auszuhalten. Insbesondere muss die Temperaturdifferenz zwischen der "heißen" und "kühlen" Seite möglichst groß sein, um die entsprechenden Bauteile zu schützen. Weiterhin sollten die zu schützenden Bauteile nicht durch eine Rauigkeit der Oberflächen beschädigt werden.

Überraschenderweise kann die Aufgabe gelöst werden durch ein Verfahren zur Herstellung eines Wärmeschutzproduktes mit folgenden Schritten:
- Bereitstellen einer textilen Struktur aus anorganischen Fasern oder einer Kombination von organischen und anorganischen Fasern,
- Behandlung der textilen Struktur mit mindestens einem Bindemittel, um eine modifizierte textile Struktur zu erhalten,
- Beschichten der modifizierte textile Struktur mit Metallen durch Gasphasenabscheidung.

Erfindungsgemäß wird also eine textile Struktur bereitgestellt. Diese umfasst anorganische Fasern oder eine Kombination von organischen und anorganischen Fasern.

Geeignete anorganische Fasern sind beispielsweise aus Glas, Karbon, Silikat, insbesondere Aluminiumsilikat, Keramik, Basalt.

Geeignete organische Substanzen sind Polymere wie Aramid (Kevlar^{®}), Polyamid, Polyimid, Melaminharz, etc.

Die textilen Strukturen können auf vielfältige Weise aus den Fasern hergestellt werden, beispielsweise in Form von Geweben, Gestricken, Gewirken, Gefügen oder Gelegen oder auch gewebten oder gestrickten Schläuchen.

Auf die so vorhandene textile Struktur wird anschließend ein Bindemittel aufgetragen, um eine modifizierte textile Struktur zu erhalten. Das Bindemittel kann eine oder mehrere Substanzen enthalten. Ein geeignetes Bindemittel enthält beispielsweise eine Siliziumverbindung, bevorzugt ein Polysiloxan.

Besonders geeignete Polysiloxane sind substituierte Siloxane, beispielsweise Poly(dimethylsiloxan). Weitere geeignete Bindemittel sind alle Hochleistungskunststoffe, die das Verhalten des Endproduktes in der Anwendung hinsichtlich Verarbeitbarkeit, Festigkeit, Temperaturbeständigkeit, Isoliervermögen, chemische Beständigkeit verbessern, zum Beispiel EPDM, PFA, PMMA, POM, PEEK, PVA, Epoxyharze sowie Hybridpolymere.

Die Eigenschaften des Bindemittels können verbessert werden durch den Zusatz von mineralischen und/oder keramischen Additiven, wie Metalloxiden, Silikaten, mineralischen Carbonaten oder Mischungen davon. Zusätzlich können organisch modifizierte Silane, Titanate oder Zirkonate enthalten sein.

Das Bindemittel wird typischerweise in einer Menge von 0,5 bis 3.000 g/m² der textilen Struktur aufgetragen, wobei der Bereich 10 bis 200 g/m² bevorzugt ist.

Auf die so erhaltene modifizierte textile Struktur werden dann Metalle durch Gasphasenabscheidung aufgetragen.

Gasphasenabscheidung (physical vapour deposition) umfasst eine Gruppe von vakuumbasierenden Beschichtungsverfahren, bei denen die Schicht durch Kondensation eines Materialdampfs gebildet wird. Hierbei wird jeweils Gas/Dampf der schichtbildenden Teilchen erzeugt. Anschließend wird das erzeugte Gas zum Substrat transportiert, um dort zu kondensieren und eine Schicht auszubilden.

Entsprechende Verfahren sind dem Fachmann bekannt.

Typischerweise liegt das abzuscheidende Material in fester Form in einer weitgehend evakuierten Beschichtungskammer vor. Anschließend wird das Metall in einem dampfförmigen Zustand überführt. Geeignete Verfahren hierfür sind das thermische Verdampfen, das Elektronenstrahlverdampfen und das Laserstrahlverdampfen. Eine Alternative hierzu ist das sogenannte "Sputtern", bei dem Ausgangsmaterial durch Ionenbeschuß zerstäubt und in die Gasphase überführt wird.

Das verdampfte Material bewegt sich dann aufgrund seiner kinetischen Energie oder geführt durch elektrische Felder auf die zu beschichtenden Substrate, in diesem Fall die modifizierte textile Fläche, zu. Die weitgehende Evakuierung der Kammer dient dazu, eine Streuung der Dampfteilchen zu vermeiden.

Typischerweise soll die Dicke der Metallschicht zwischen 10 bis 1000 nm, bevorzugt 20 bis 500 nm, noch mehr bevorzugt 25 bis 450 nm liegen.

In einer besonders bevorzugten Ausführungsform wird das Substrat in der Kammer rotiert, um eine gleichmäßige Beschichtung zu erreichen.

Bevorzugt werden als Metalle eingesetzt Aluminium, Chrom, Titan, Kupfer, Silber, Gold, Silizium und Kombinationen hiervon.

Gegenstand der Erfindung ist auch ein Wärmeschutzprodukt erhältlich durch das erfindungsgemäße Verfahren. Ein solches Wärmeschutzprodukt umfasst mindestens drei Schichten, nämlich eine erste Schicht aus einer textilen Struktur aus einer anorganischen Faser oder einer Kombination von anorganischen und organischen Fasern, eine zweite Schicht aus einem Bindemittel und eine dritte Schicht aus einem Metall, erhältlich durch Gasphasenabscheidung.

Das gesamte Flächengewicht des Wärmeschutzprodukts liegt typischerweise zwischen 60 und 5.000 g/m², bevorzugt 200 bis 2.500 g/m², noch mehr bevorzugt 600 bis 1.800 g/m².

Das erfindungsgemäße Wärmeschutzprodukt kann zusätzlich Verschlusskomponenten enthalten, mit denen die textile Verschlusskomponenten in eine geeignete Form gebracht werden können. Geeignete Strukturen sind beispielsweise Klettverschlüsse und Druckknöpfe. Zur Befestigung an den Einsatzstellen können weiterhin beispielsweise Bänder, Binder oder Schnüre vorhanden sein. Es kann auch eine zusätzliche Kleberausrüstung vorhanden sein.

In einer weiteren Ausführungsform können z.B. auch Nähte, Druckknöpfe, Haken und/oder Ösen vorhanden sein, mit denen Teilbereiche der Struktur zusammengehalten werden.

Gegenstand der Erfindung ist weiterhin die Verwendung des erfindungsgemäßen Wärmeschutzproduktes zum Schutz von hitzeempfindlichen Bauteilen, insbesondere im Kraftfahrzeugbau und insbesondere zur Isolierung von Abgasanlagen, -leitungen oder-bauteilen.

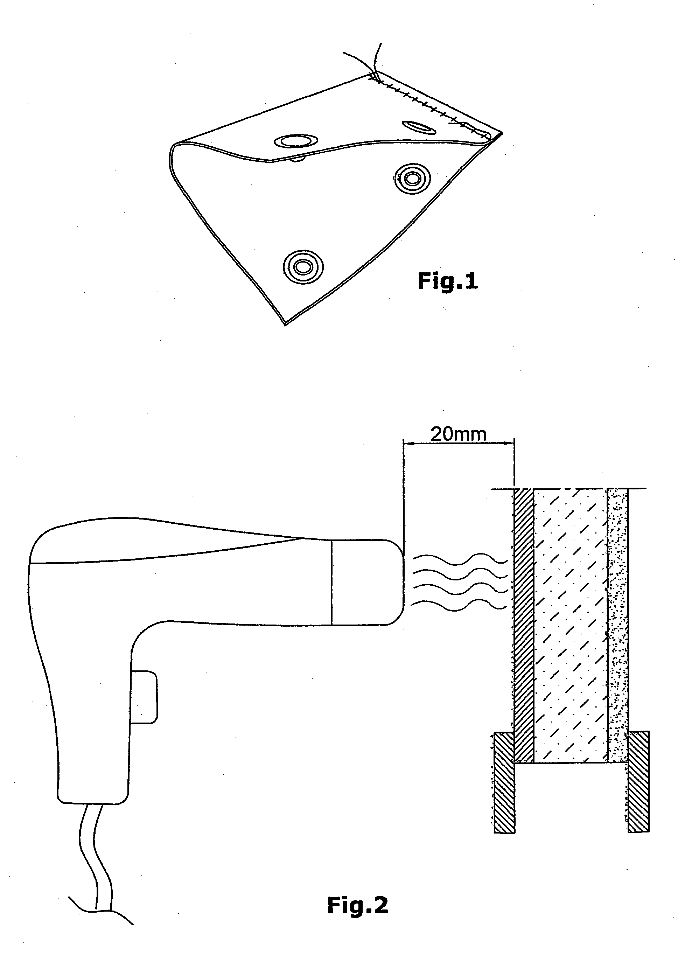

Figur 1 zeigt eine beispielhafte Ausgestaltung des erfindungsgemäßen Materials mit zwei Druckknöpfen und einer Naht.

Figur 2 zeigt einen Fönmessplatz zur Bestimmung des Temperaturgradienten.

Das erfindungsgemäße Verfahren wird durch die nachfolgenden Beispiele näher erläutert.

### Beispiel 1

Ein Glasgewebe mit einer Stärke von 0,8 mm, erhältlich von der Klevers Glasgewebe GmbH & Co. KG, wurde mit einem Bindemittel bestehend aus einem Alkylsiliconharz in einer Menge von 15 g/m² getränkt. Anschließend wurde in einer Vacuumkammer durch Gasphasenabscheidung eine Aluminiumschicht von 100 nm je Seite aufgedampft. In einem weiteren Verfahrensschritt wurde eine Seite des Materials durch Rakeln mit einer Beschichtung versehen. Diese Beschichtung bestand aus einem mittels Eisenoxid schwarz eingefärbten Polydimethylsiloxan.

### Beispiel 2

### Prüfung der Eignung

Ein Gewebe gemäß Beispiel 1 wurde mit einem Material des Standes der Technik verglichen. Dabei handelte es sich um ein Glasgewebe wie im Beispiel 1, auf das eine 20 µm Aluminiumfolie mit einem Silikonkleber auflaminiert wird. An einem geregelten Fönmessplatz wurde eine Temperaturgradientenmessung durchgeführt. Hierzu wurde mit einem Heißluftfön mit einem Abstand von 20 mm auf die Außenseite des Testmaterials geblasen. Mit Hilfe zweier Pelletierelemente werden die Innen- und Außentemperaturen gemessen. Der Heißluftfön wurde auf eine Temperatur von 300°C eingestellt.

Bei dem erfindungsgemäßen Material wurde eine Innentemperatur von 222°C gemessen, bei dem Material des Standes der Technik eine Innentemperatur von 230°C.

Zusätzlich wurde eine Dauertemperaturbelastung durchgeführt. Die maximale Temperatur, die das Material des Standes der Technik für eine Zeit von 1000 h übersteht, lag bei 240°C, während das erfindungsgemäße Material eine Erhitzung für 1000 h auf 300°C überstand.

## Patentansprüche

1. Verfahren zur Herstellung eines Wärmeschutzproduktes umfassend die Schritte
- Bereitstellen einer textilen Struktur aus anorganischen Fasern oder einer Kombination von organischen und anorganischen Fasern,
- Behandlung der textilen Struktur mit mindestens einem Bindemittel, um eine modifizierte textile Struktur zu erhalten,
- Beschichten der modifizierten textilen Struktur mit Metallen durch Gasphasenabscheidung.

2. Verfahren nach Anspruch 1, **dadurch gekennzeichnet, dass** die anorganischen Fasern ausgewählt werden aus Glas, Carbon, Silikat, Keramik, Aluminiumsilikat, Basalt, natürliche Polymere, Künstliche Polymere wie Aramide, Polyamide, Polyimide, Melaminharze.

3. Verfahren nach Anspruch 1 oder 2, **dadurch gekennzeichnet, dass** die textile Struktur ein Gewebe, Gestricke, Gewirke, Gefüge oder Gelege ist.

4. Verfahren nach einem der Ansprüche 1 bis 3, **dadurch gekennzeichnet, dass** das Bindemittel ausgewählt aus EPDM, PFA, PMMA, POM, PEEK, PVA, Epoxydharzen, Hybridpolymeren, Siliziumverbindungen, insbesondere Polysiloxanen.

5. Verfahren nach Anspruch 4, **dadurch gekennzeichnet, dass** das Polysiloxan ein substituiertes Siloxan, insbesondere ein Poly(dimethylsiloxan) ist.

6. Verfahren nach einem der Ansprüche 1 bis 5, **dadurch gekennzeichnet, dass** das Bindemittel zusammen mit mineralischen und/oder keramischen Additiven, ausgewählt aus der Gruppe bestehend aus Metalloxiden, Silikaten, mineralischen Carbonaten oder Mischungen davon verwendet wird.

7. Verfahren nach einem der Ansprüche 1 bis 6, **dadurch gekennzeichnet, dass** das Bindemittel als Haftvermittler organisch modifizierte Silane, Titanate oder Zirkonate enthält.

8. Wärmeschutzprodukt erhalten durch ein Verfahren gemäß mindestens einem der Ansprüche 1 bis 7.

9. Wärmeschutzprodukt nach Anspruch 8, **dadurch gekennzeichnet, dass** das Flächengewicht zwischen 60 und 5.000 g/m² liegt.

10. Wärmeschutzprodukt nach einem der Ansprüche 8 oder 9, **dadurch gekennzeichnet, dass** zusätzlich Verschlusskomponenten, insbesondere Klettverschlüsse, Druckknöpfe, Bänder, Binder oder Schnüre vorhanden sind.

11. Wärmeschutzprodukt nach mindestens einem der Ansprüche 8 bis 10, **dadurch gekennzeichnet, dass** durch eine oder mehreren Nähte eine Schlauchform gebildet ist.

12. Wärmeschutzprodukt nach mindestens einem der Ansprüche 8 bis 11, **dadurch gekennzeichnet, dass** zusätzlich eine Klebeausrüstung vorhanden ist.

13. Verwendung eines Wärmeschutzproduktes nach mindestens einem der Ansprüche 8 bis 12 zum Schutz von hitzeempfindlichen Bauteilen, insbesondere zur Isolierung von Abgasanlagen, -leitungen oder -bauteilen.

## Claims

1. A process for preparing a heat-protection product, comprising the steps of:
- providing a textile structure of inorganic fibers or of a combination of organic and inorganic fibers;
- treating said textile structure with at least one binder to obtain a modified textile structure;
- coating said modified textile structure with metals by vapor-phase deposition.

2. The process according to claim 1, **characterized in that** said inorganic fibers are selected from glass, carbon, silicate, ceramics, aluminum silicate, basalt, natural polymers, artificial polymers, such as aramids, polyamides, polyimides, melamine resins.

3. The process according to claim 1 or 2, **characterized in that** said textile structure is a woven fabric, knitted fabric, knitting, fabric, or laid web.

4. The process according to any of claims 1 to 3, **characterized in that** said binder is selected from EPDM, PFA, PMMA, POM, PEEK, PVA, epoxy resins, hybrid polymers, silicon compounds, especially polysiloxanes.

5. The process according to claim 4, **characterized in that** said polysiloxane is a substituted siloxane, especially a poly(dimethylsiloxane).

6. The process according to any of claims 1 to 5, **characterized in that** said binder is used together with mineral and/or ceramic additives selected from the group consisting of metal oxides, silicates, mineral carbonates or mixtures thereof.

7. The process according to any of claims 1 to 6, **characterized in that** said binder is contains organically modified silanes, titanates or zirconates as adhesion promoters.

8. A heat-protection product obtained by a process according to at least one of claims 1 to 7.

9. The heat-protection product according to claim 8, **characterized in that** its mass per unit area is from 60 to 5000 g/m².

10. The heat-protection product according to either of claims 8 or 9, **characterized in that** fastening components, especially hook and loop fasteners, snap fasteners, ribbons, binders or strings, are additionally present.

11. The heat-protection product according to at least one of claims 8 to 10, **characterized in that** a tubular form has been formed by one or more seams.

12. The heat-protection product according to at least one of claims 8 to 11, **characterized in that** an adhesive finishing is additionally present.

13. Use of a heat-protection product according to at least one of claims 8 to 12 for protecting thermally sensitive construction parts, especially for insulating exhaust systems, lines or parts.

## Revendications

1. Procédé de fabrication d'un produit d'isolation thermique, comprenant les étapes suivantes
- réalisation d'une structure textile composée de fibres inorganiques ou d'une combinaison de fibres organiques et inorganiques,
- traitement de la structure textile avec au moins un liant afin d'obtenir une structure textile modifiée,
- revêtement de la structure textile modifiée avec des métaux par dépôt en phase vapeur.

2. Procédé selon la revendication 1, **caractérisé en ce que** les fibres inorganiques sont sélectionnées parmi le verre, le carbone, le silicate, la céramique, le silicate d'aluminium, le basalte, des polymères naturels, des polymères artificiels tels qu'aramides, polyamides, polyimides, résines de mélamine.

3. Procédé selon la revendication 1 ou 2, **caractérisé en ce que** la structure textile est un tissu, un tricot, un produit à mailles, une structure ou un produit non tissé.

4. Procédé selon une des revendications 1 à 3, **caractérisé en ce que** le liant est sélectionné parmi EPDM, PFA, PMMA, POM, PEEK, PVA, des résines époxy, des polymères hybrides, des composés du silicium, en particulier des polysiloxanes.

5. Procédé selon la revendication 4, **caractérisé en ce que** le polysiloxane est un siloxane substitué, en particulier un poly(diméthylsiloxane).

6. Procédé selon une des revendications 1 à 5, **caractérisé en ce que** le liant est utilisé en même temps que des additifs minéraux et/ou céramiques sélectionnés dans le groupe constitué d'oxydes métalliques, de silicates, de carbonates minéraux ou de mélanges de ceux-ci.

7. Procédé selon une des revendications 1 à 6, **caractérisé en ce que** le liant contient, en tant que promoteur d'adhérence, des silanes, titanates ou zirconates organiquement modifiés.

8. Produit d'isolation thermique obtenu par un procédé selon au moins une des revendications 1 à 7.

9. Produit d'isolation thermique selon la revendication 8, caractérisé en que le grammage est compris entre 60 et 5 000 g/m².

10. Produit d'isolation thermique selon une des revendications 8 ou 9, **caractérisé en ce qu'**il y a en plus des composants de scellement, en particulier des velcros, des boutons-pression, des rubans, des liens ou des ficelles.

11. Produit d'isolation thermique selon au moins une des revendications 8 à 10, **caractérisé en ce qu'**une forme de boucle est formée par un ou plusieurs fils.

12. Produit d'isolation thermique selon au moins une des revendications 8 à 11, **caractérisé en ce qu'**il y a en plus un équipement adhésif.

13. Utilisation d'un produit d'isolation thermique selon au moins une des revendications 8 à 12 pour la protection de composants sensibles à la chaleur, en particulier pour l'isolation de systèmes, conduites ou composants de gaz d'échappement.
